# EUROPEAN PATENT SPECIFICATION

(11) **EP 4 520 295 B1**
(45) Date of publication and mention of the grant of the patent: **15.07.2026**
(21) Application number: 23855870.4
(22) Date of filing: 17.08.2023
(51) Int. Cl.: A61C 17/34, A46B 7/04

(54) **ELECTRIC TOOTHBRUSH HEAD**
ELEKTRISCHER ZAHNBÜRSTENKOPF
TÊTE DE BROSSE À DENTS ÉLECTRIQUE

(30) Priority: 11.07.2023 CN 202310848130; 14.07.2023 CN 202310872000
(43) Date of publication of application: 12.03.2025
(73) Proprietor: Ningbo Aolbea Oral Care Products Co., Ltd., Ningbo, Zhejiang 315400 (CN)
(72) Inventor: XIONG, Sijun, Ningbo, Zhejiang 315400 (CN); ZHENG, Chuke, Ningbo, Zhejiang 315400 (CN); ZHENG, Jianli, Ningbo, Zhejiang 315400 (CN)
(74) Representative: Santarelli
(86) International application number: PCT/CN2023/113541
(87) International publication number: WO 2025/010791

(56) References cited:
- WO-A1-2010/142098
- CN-A- 1 582 134
- CN-A- 115 281 871
- CN-Y- 2 683 063
- KR-Y1- 200 365 918
- KR-Y1- 200 378 050
- US-A1- 2001 014 990
- US-A1- 2006 032 006

## Description

### Technical Field

The present invention relates to the technical field of electric toothbrush heads.

### Background Art

An electric toothbrush, invented by Philippe-Guy Woog, is a toothbrush that uses rapid rotation or vibration of an electric motor core to produce high-frequency vibrations of the brush head, instantly breaking down toothpaste into fine foam for deep cleaning between teeth. At the same time, the vibration of the bristles can promote blood circulation in the oral cavity and have a massaging effect on the gum tissue.

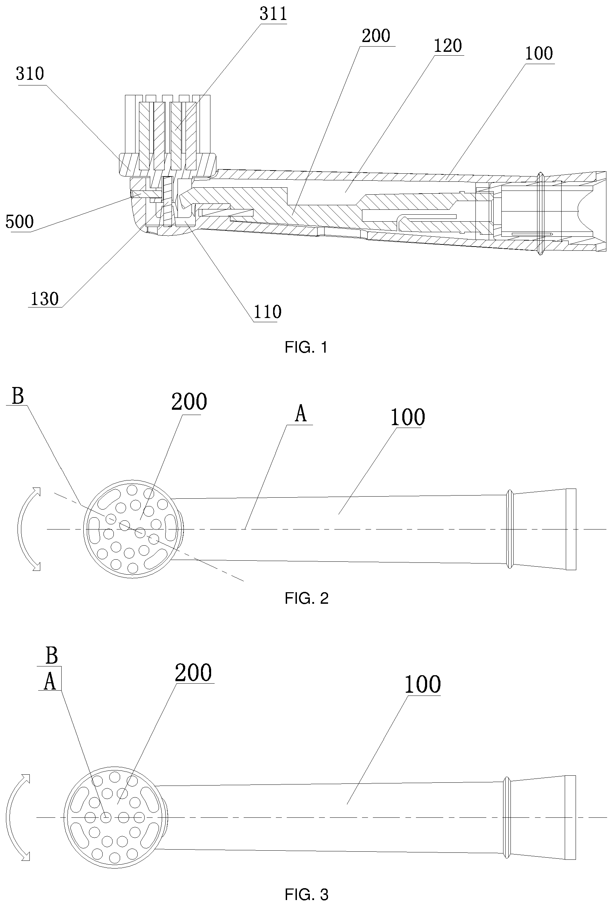

Existing electric toothbrushes generally include an electric toothbrush handle and an electric toothbrush head used in combination. As shown in Figure 1, the electric toothbrush head includes a brush rod 100, a swing arm 200, and a tufted block 300 with bristles 310. The brush rod 100 is provided with a housing cavity 110 at its front end, and the housing cavity is equipped with a central shaft 140. The tufted block 300 is mounted in the housing cavity 110 and is provided with a mating hole 330 that cooperates with the central shaft 140 to swing left and right. At the same time, a rivet 500 is provided between the tufted block 300 and the housing cavity 110 to prevent the tufted block from detaching; the brush rod 100 also has a mounting chamber 120 extending from the rear end to the front and communicating with the housing cavity 110. The swing arm 200 is mounted in the mounting chamber 120 and is connected to the tufted block 300 through a drive shaft 220. Thus, the swing arm 200 can move under the drive of the driving device in the electric toothbrush handle to drive the tufted block 300 to swing left and right along the central shaft. However, the existing electric toothbrush head's tufted block 300 can only swing left and right due to the limitation of the rivet 500. At the same time, the stability of the tufted block's rotation restricted by the rivet and the central shaft is poor, resulting in a poor cleaning effect. Generally, it can only clean the surface of the teeth and is difficult to remove foreign objects from between the teeth. Furthermore, the rivet of the existing electric toothbrush head is directly exposed on the outside without any cover. Once the rivet becomes loose, it may fall into the user's oral cavity, and even cause the user to swallow the rivet into the stomach, posing a danger. There is room for improvement.

Patent document US 2006/032006 A1 discloses an electrically powered toothbrush with a body, neck, and head, featuring dual bristle carriers with various motion combinations. These motions include linear and angular movements in two or three dimensions, driven by an electric motor and drive mechanism within the body. The toothbrush is designed to provide unique cleaning efficacy through the combinations of movements of the bristle carriers.

Patent document WO 2010/142098 A1 outlines an electrical toothbrush head designed to enhance the user's brushing experience by providing a more secure and ergonomic bristle base structure. This structure allows for improved brushing action and oral cavity stimulation, aiming to achieve a balance between effective dental care and comfortable mouthfeel during brushing. The design includes a transition portion on the transmission shaft that fits between right and left transmission arms, with a protruding block that includes a through groove. The shaft's transition and supporting portions are integral to the toothbrush head's ability to connect to the head housing and bristle base.

### Summary of the Invention

The invention is set out in the appended set of claims. The present invention aims to overcome the defects of the existing technology and provide an electric toothbrush head with a simple and reasonable structure. By the cooperation of the guide protrusions and the guide grooves, the tufted block can move up and down while swinging left and right. During the brushing process, the left and right swinging of the tufted block can achieve up and down brushing, and at the same time, the up and down movement of the tufted block can apply a gentle vertical impact force on the tooth surface, allowing the bristles to better penetrate into the gaps between teeth and move in and out along the gaps to push out the residues in the gaps, thus improving the cleaning effect of the toothbrush head. At the same time, the tufted block can be easily inserted into the housing cavity of the brush rod through the mounting slot and the guide protrusions can be snapped into the corresponding guide grooves. Furthermore, by defining the position of the mounting slot on the housing cavity and limiting the swing angle through the cooperation of the drive shaft and the swinging slot, the movement of the guide protrusions within the guide grooves is ensured, guaranteeing the reliability and stability of the movement of the tufted block.

To achieve the above objectives, the present invention provides an electric toothbrush head for use with an electric toothbrush handle, including a brush rod, a swing arm, and a tufted block with bristles; wherein the brush rod has a first central axis, the brush rod is provided with a housing cavity on the upper surface of its front end portion, and the brush rod is provided with a mounting chamber extending from the rear end portion to the front and communicating with the housing cavity along the first central axis; the tufted block is movably and limitingly mounted in the housing cavity of the brush rod, the tufted block has a second central axis and is centered by aligning the second central axis parallel or collinear with the first central axis; the swing arm is mounted in the mounting chamber of the brush rod and is connected to the tufted block in a linked manner.

The brush rod is provided with a vertically extending rotating shaft at the middle of the bottom of the housing cavity, and the bottom of the tufted block is correspondingly provided with a rotating hole that cooperates with the rotating shaft to allow rotation around the axis;

The tufted block has at least one guide protrusion on the side walls on both sides of the second central axis, the opening of the housing cavity is provided with a mounting slot corresponding to the guide protrusion after the tufted block is deflected at least a first angle from the first central axis, and the inner wall of the housing cavity is also provided with a guide groove corresponding to the mounting slot and communicating with it for the guide protrusion to slide into to guide the tufted block to move up, down, left, and right, the guide grooves on both sides of the first central axis on the housing cavity are arranged to extend in opposite directions;

The rear end portion of the tufted block is provided with a swinging slot, the front end portion of the swing arm is provided with a drive shaft extending into the swinging slot, and the drive shaft drives the tufted block to swing left and right by contacting the opposite inner walls of the swinging slot, and the maximum deflection angle of the swing arm driving the tufted block to swing on one side is less than the first angle.

It is further provided that the amplitude of the tufted block moving up and down along the guide groove is 0.1mm-2mm.

It is further provided that the bottom wall of the mounting chamber is provided with a limiting rib, the top of the limiting rib is spaced from the top wall of the mounting chamber to form a through channel;
The front end portion of the swing arm abuts against the limiting rib and is provided with a positioning pivot at the corresponding abutting position, and the limiting rib is correspondingly provided with a positioning hole that cooperates with the positioning pivot to allow the swing arm to swing left and right around the axis;
The drive shaft of the swing arm is arranged corresponding to the through channel and is connected to the tufted block through the through channel.

It is further provided that the swing arm is symmetrically provided with elastic reset components on both sides of its front end portion, and the elastic reset components on both sides always have a tendency to rotate towards the center to achieve movement towards the center.

It is further provided that the elastic reset components on both sides of the swing arm are part of an integral balance spring, the balance spring includes spring sections on both sides and a connecting part connecting the two spring sections.

It is further provided that the swing arm is provided on both sides of its front end portion with notches for embedding the spring sections and recesses extending from the front end of the swing arm to the rear to guide both sides of the notches for embedding the connecting part.

It is further provided that the front end face of the swing arm is provided with an anti-rotation slot, and the tail of the drive shaft has a step;
When the drive shaft is fixedly inserted into the anti-rotation slot of the swing arm, the step is constructed to press against the connecting part of the balance spring.

It is further provided that the swing arm is correspondingly provided with an exhaust hole connected to the rear end of the anti-rotation slot, and the extension axis of the exhaust hole is parallel or perpendicular to the extension axis of the anti-rotation slot.

It is further provided that both sides of the notch are provided with positioning posts that cooperate with the inner holes of the spring sections.

It is further provided that the elastic reset components on both sides are fixedly connected with balancing members, and the opposite side walls of the mounting chamber are correspondingly provided with guide fixing grooves for embedding the balancing members.

It is further provided that the guide fixing groove is provided with a balance member rib corresponding to the front slot wall, the balance member rib and the front end of the guide fixing groove cooperate to form a limiting placement area for limiting the placement of the balance member, the front wall surface of the balance member rib is tangent to the outer surface of the balance member, and its rear wall surface is a sloped or curved structure for guiding the balance member to slide in.

It is further provided that the front end portion of the drive shaft is provided with a bent segment arranged in the swinging slot, and the tufted block is driven to swing left and right by the bent segment contacting the corresponding opposite inner walls of the swinging slot.

It is further provided that it also includes a fixation sleeve, the fixation sleeve is fixedly mounted inside the rear end portion of the mounting chamber to lock the swing arm in place within the mounting chamber.

It is further provided that the cross-sectional shape of the guide protrusion is circular, elliptical, triangular, or trapezoidal.

It is further provided that the guide groove is helical, sloped, or arc-shaped.

It is further provided that the guide protrusion is integrally connected to the tufted block, or the guide protrusion is a separate component mounted on the tufted block.

Compared with the existing technology, the present invention has a simple and reasonable structure and has the following advantages:
1. By the cooperation of the guide protrusions and the guide grooves, the tufted block can move up and down in the vertical direction while swinging left and right in the horizontal direction. During the brushing process, the left and right swinging of the tufted block can achieve up and down brushing, and at the same time, the up and down movement of the tufted block can apply a gentle vertical impact force on the tooth surface, allowing the bristles to better penetrate into the gaps between teeth and move in and out along the gaps to push out the residues in the gaps, thus improving the cleaning effect of the toothbrush head;
2. The tufted block can be easily inserted into the housing cavity of the brush rod through the mounting slot and the guide protrusions can be snapped into the corresponding guide grooves;
3. By defining the position of the mounting slot on the housing cavity and limiting the swing angle through the cooperation of the drive shaft and the swinging slot, the movement of the guide protrusions within the guide grooves is ensured, guaranteeing the reliability and stability of the movement of the tufted block;
4. The symmetrically arranged elastic reset components on both sides of the swing arm not only have a buffering effect to reduce noise during operation but also enable the swing arm to automatically center itself, ensuring that the extension axes of the tufted block and the brush rod are always on the same line or parallel lines, maintaining the overall aesthetics and consistency of the electric toothbrush head.

### Brief Description of the Drawings

Figure 1 is a schematic axial sectional view of an existing electric toothbrush head;
Figure 2 is a schematic view of the existing electric toothbrush head in a non-centered state;
Figure 3 is a schematic view of the electric toothbrush head of the present invention in a centered state;
Figure 4 is a schematic axial sectional view of the electric toothbrush head of the present invention;
Figure 5 is a schematic sectional view of the tufted block corresponding to the electric toothbrush head of the present invention;
Figure 6 is a schematic sectional view of the reset elastic component corresponding to the electric toothbrush head of the present invention;
Figure 7 is a schematic axial sectional view of the brush rod of the present invention;
Figure 8 is a schematic view of the separated structure of the electric toothbrush head of the present invention;
Figure 9 is a further separated schematic view of the front end portion of the swing arm in Figure 8;
Figure 10 is a schematic plan view of the tufted block during installation;
Figure 11 is a schematic plan view after the tufted block is installed in place;
Figure 12 is a schematic view of a specific implementation structure of the drive shaft corresponding to the swing arm one;
Figure 13 is a schematic view of a specific implementation structure of the drive shaft corresponding to the swing arm two;
Figure 14 is a schematic view of a specific implementation structure of the anti-rotation slot corresponding to the swing arm one;
Figure 15 is a schematic view of a specific implementation structure of the anti-rotation slot corresponding to the swing arm two;
Figure 16 is a schematic view of another specific implementation structure of the tufted block.

### List of reference numerals:

100, brush rod; 110, housing cavity; 111, mounting slot; 112, guide groove; 120, mounting chamber; 121, guide fixing groove; 1211, balance member rib; 130, rotating shaft; 140, limiting rib; 141, positioning hole; 142, through channel; 200, swing arm; 210, positioning pivot; 220, drive shaft; 221, bent segment; 222, step; 230, notch; 240, recess; 250, positioning post; 260, anti-rotation slot; 270, exhaust hole; 300, tufted block; 310, face support; 311, bristles; 320, rotating base; 321, guide protrusion; 322, rotating hole; 323, swinging slot; 400, fixation sleeve; 500, rivet; 600, balance spring; 610, spring section; 620, connecting part; 630, balancing member; A, first central axis; B, second central axis; C, first angle.

### Detailed Description of Embodiments

The following is a detailed description of a specific embodiment of the present invention in conjunction with the accompanying drawings, but it should be understood that the scope of protection of the present invention is not limited by the specific embodiment.

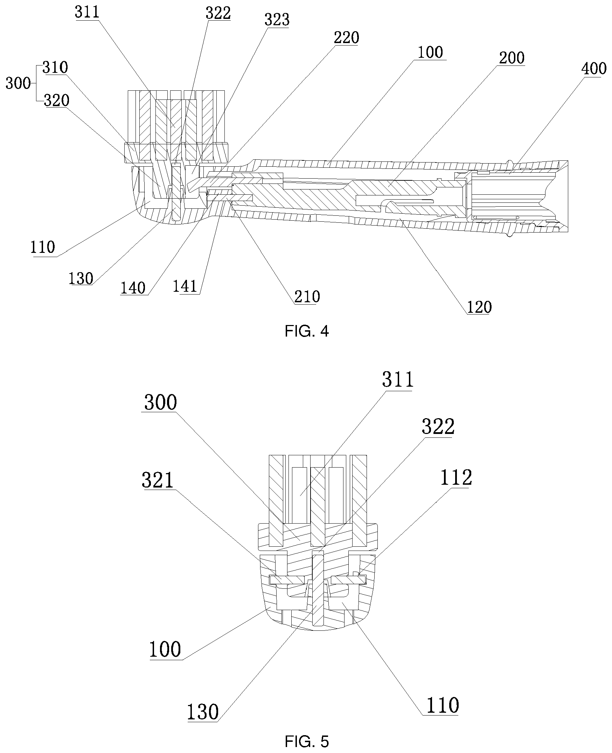

An electric toothbrush head of the present invention, as shown in Figures 4 to 8, is used in conjunction with an electric toothbrush handle, which provides the necessary power for the operation of the electric toothbrush head; the electric toothbrush head includes a brush rod 100, a swing arm 200, a fixation sleeve 400, and a tufted block 300 with bristles 311. The tufted block 300 is correspondingly mounted on the front end portion of the brush rod 100, the swing arm 200 is mounted inside the brush rod 100 and the front end portion of the swing arm 200 is connected to the tufted block 300, and the fixation sleeve 400 is fixedly mounted inside the brush rod 100 to lock the swing arm 200 in place within the brush rod 100 to prevent it from detaching; thus, when the electric toothbrush head is used in conjunction with the electric toothbrush handle, the swing arm 200 can move under the drive of the driving device in the electric toothbrush handle to drive the tufted block 300 to swing left and right to achieve an automatic up and down brushing effect.

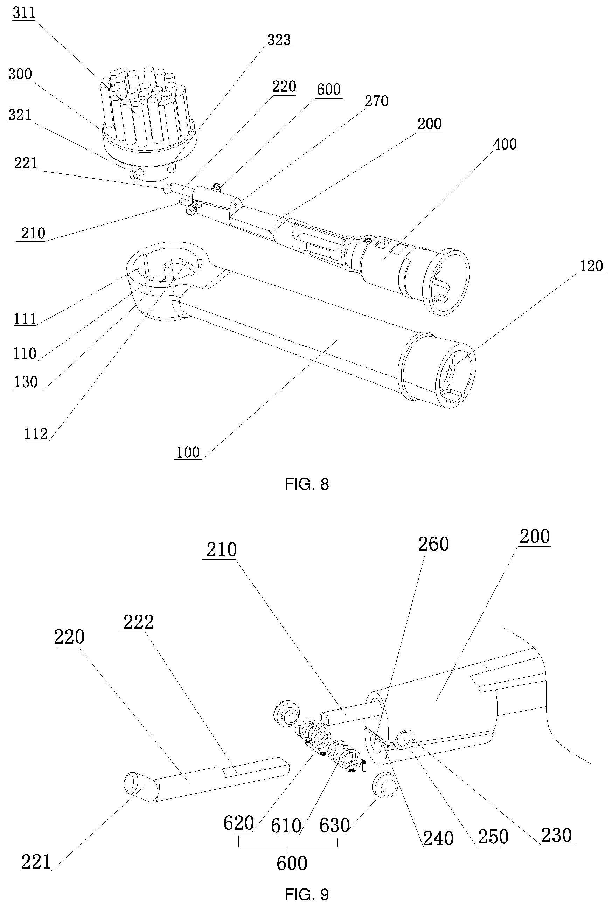

In this embodiment, as shown in Figure 8, the tufted block 300 includes a face support 310 with bristles 311 and a rotating base 320 fixedly connected to the lower surface of the face support 310; the tufted block 300 has a second central axis B, and the rotating base 320 is provided with oppositely arranged guide protrusions 321 on the side walls corresponding to the second central axis B. The guide protrusions 321 on both sides can be integrally connected parts of the rotating base 320 or separate components mounted on the rotating base 320 later. At the same time, the cross-sectional shape of the guide protrusions 321 can be circular, elliptical, triangular, or trapezoidal, etc.; the rotating base 320 is provided with a rotating hole 322 with a certain depth at the middle of its bottom, and the rotating base 320 is provided with a swinging slot 323 at its rear end face to achieve linkage with the swing arm 200.

In this embodiment, as shown in Figures 4 and 8, the swing arm 200 is provided with a drive shaft 220 extending forward at its front end portion, and the front end portion of the drive shaft 220 is provided with a bent segment 221 arranged in a bent manner. The bent segment 221 extends into the swinging slot 323 of the rotating base 320, and the swing arm 200 swings under the action of the driving device in the electric toothbrush handle to drive the bent segment 221 of the drive shaft 220 to act on the opposite inner walls of the swinging slot 323 to make the tufted block 300 swing left and right. By controlling the bending degree of the bent segment 221 of the drive shaft 220, the swinging amplitude of the tufted block 300 can be controlled; the specific structure of the drive shaft 220 (bent segment 221) of this patent is shown in Figures 8, 12, and 13, which can be a 7-shaped structure, Y-shaped structure, T-shaped structure, and other shapes that can drive the tufted block to swing left and right.

In this embodiment, as shown in Figures 4, 5, 7, 8, 10, and 11, the brush rod 100 has a first central axis A arranged along its rod body, and the brush rod 100 is provided with a housing cavity 110 at its front end portion for accommodating the rotating base 320 of the tufted block 300. The bottom of the housing cavity is correspondingly provided with a vertically extending rotating shaft 130 for insertion into the rotating hole 322 of the rotating base 320. The rotating shaft 130 and the rotating hole 322 cooperate to allow the tufted block 300 to rotate at a fixed point. At the same time, the housing cavity 110 is provided with a mounting slot 111 at its opening corresponding to the guide protrusions 321, which guides the rotating base 320 and its guide protrusions 321 to be inserted into the housing cavity 110 from top to bottom. At the same time, the inner wall of the housing cavity 110 is also provided with a guide groove 112 corresponding to the mounting slot 111 and communicating with it for cooperating with the guide protrusions 321 to guide the tufted block 300 to move left, right, up, and down. The guide groove 112 is preferably helical, sloped, or arc-shaped and guides the tufted block 300 to move up and down with an amplitude preferably of 0.1mm-2mm. The opening of the guide groove 112 is preferably connected to the bottom of the mounting slot 111 to facilitate the screwing in of the guide protrusions 321. The guide grooves 112 on both sides of the first central axis A extend in opposite directions, i.e., one side of the guide groove 112 extends forward and upward from the starting position, while the other side extends backward and downward from the starting position, or vice versa. At the same time, the brush rod 100 is provided with a mounting chamber 120 extending from the rear end portion to the front along the first central axis A for mounting the swing arm 200. The front end bottom wall of the mounting chamber 120 is provided with a protruding limiting rib 140, and the top of the limiting rib 140 is spaced from the top wall of the mounting chamber 120 to form a through channel 142 connecting the mounting chamber 120 with the housing cavity 110.

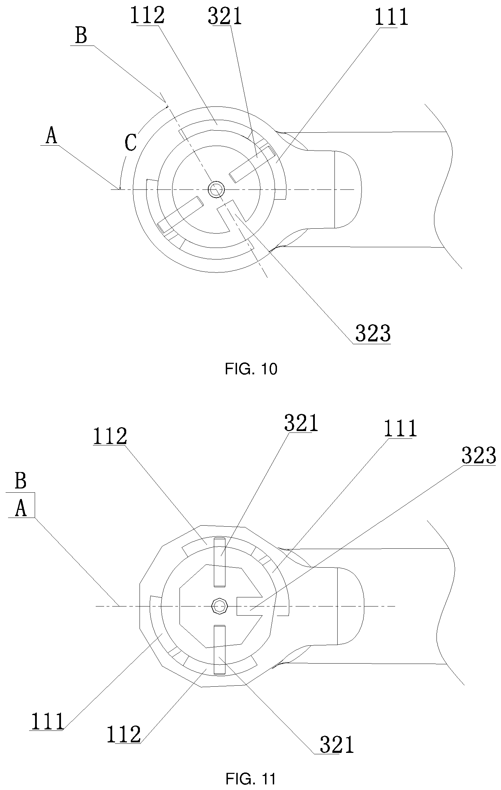

During installation, the guide protrusions 321 of the tufted block 300 are aligned with the mounting slots 111 of the housing cavity 110, at which time the second central axis B of the tufted block 300 is arranged at a first angle C with the first central axis A of the brush rod100 and the rotating hole 322 is directly opposite the rotating shaft 130 (as shown in Figure 10), thus facilitating the insertion of the rotating base 320 of the tufted block 300 into the housing cavity 110. Then, the tufted block 300 is rotated so that the guide protrusions 321 enter the guide groove 112 and are rotated to the initial position, that is, the second central axis B of the tufted block 300 is collinear or parallel with the first central axis A of the brush rod 100 (as shown in Figure 11), at which point the swinging slot 323 of the tufted block 300 is arranged to face backward. The swing arm 200 is inserted into the mounting chamber 120 of the brush rod 100 from the rear end until its front end abuts against the limiting rib 140, and the drive shaft 220 of the swing arm 200 passes through the through channel and extends into the swinging slot 323 of the tufted block 300, thus providing positioning and limiting constraints to the tufted block 300. Thus, by controlling the maximum single-side swing angle of the swing arm 200 driving the tufted block 300 to be less than the first angle C when the tufted block 300 is installed, the movement of the guide protrusions 321 within the guide groove 112 is ensured, thus guaranteeing the working stability of the tufted block 300.

In the above scheme, as shown in Figure 4, the swing arm 200 is mounted in the mounting chamber 120 of the brush rod 100 and its front end abuts against the limiting rib 140. The front end of the swing arm 200 is provided with a positioning pivot 210 at the corresponding position of the limiting rib 140, and the limiting rib 140 is correspondingly provided with a positioning hole 141 for the positioning pivot 210 to pass through, thus allowing the swing arm 200 to rotate under the drive of the driving device along the positioning pivot 210, thereby ensuring the stability and reliability of the movement of the swing arm 200. Further, the fixation sleeve 400 is fixedly mounted inside the rear end portion of the mounting chamber 120 by means of a convex-concave snap connection and cooperates with the limiting rib 140 to lock the swing arm 200 in place within the mounting chamber 120.

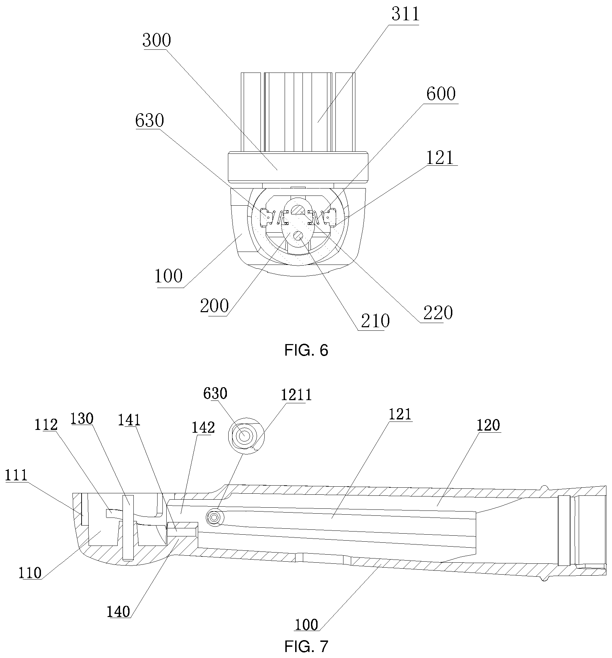

In this embodiment, as shown in Figures 6, 8, and 9, the swing arm 200 is also symmetrically provided with elastic reset components on both sides of its front end. The symmetrically arranged elastic reset components not only have a buffering effect to reduce noise during the operation of the swing arm 200 but also enable the swing arm 200 to automatically center itself, ensuring that the swing arm 200 automatically rotates towards the center when the driving device stops working, thus keeping the extension axes of the tufted block 300 and the brush rod 100 always on the same line or parallel lines (as shown in Figure 3), maintaining the overall aesthetics and consistency of the electric toothbrush head. The elastic reset components enable the swing arm 200 to automatically center itself, effectively solving the problem of the uncontrollable stop position of the existing electric toothbrush head's swing arm 200, that is, the swing arm 200 will stay at any reachable position, causing the tufted block 300 and the brush rod 100 to often be in a non-centered state (as shown in Figure 2), that is, there is an angle between the second central axis B of the tufted block 300 and the first central axis A of the brush rod 100, and the degree of this angle is less than the first angle C. The non-centered state seriously damages the overall aesthetics and consistency of the electric toothbrush head and significantly affects the buyer's desire to purchase.

In the above scheme, as shown in Figures 6, 8, and 9, the symmetrically arranged elastic reset components are part of an integral balance spring 600. The balance spring 600 includes spring sections 610 on both sides and a connecting part 620 that integrally connects the two spring sections 610, with the spring sections 610 being the aforementioned elastic reset components. In some other specific embodiments, the elastic reset components on both sides can also be independently used springs or other elastic components, such as spring plates, elastomers, etc. In this embodiment, the specific mounting structure of the balance spring 600 on the swing arm 200 is as follows: the swing arm 200 is provided on both sides of its front end portion with notches 230 for the entire spring sections 610 to be embedded and recesses 240 extending from the front end of the swing arm 200 to the rear to guide both sides of the notches 230 for embedding the connecting part 620. The notches 230 on both sides are also provided with positioning posts 250 that cooperate with the inner holes of the spring sections 610. Further preferably, the front end face of the swing arm 200 is provided with an anti-rotation slot 260 for the drive shaft 220 to be fixedly inserted, and the tail of the drive shaft 220 has a step structure 222. When the drive shaft 220 is fixedly inserted into the anti-rotation slot 260 of the swing arm 200, the step structure 222 is constructed to press against the connecting part 620 of the balance spring 600, thus improving the reliability of the installation of the balance spring 600 on the swing arm 200 and preventing it from detaching.

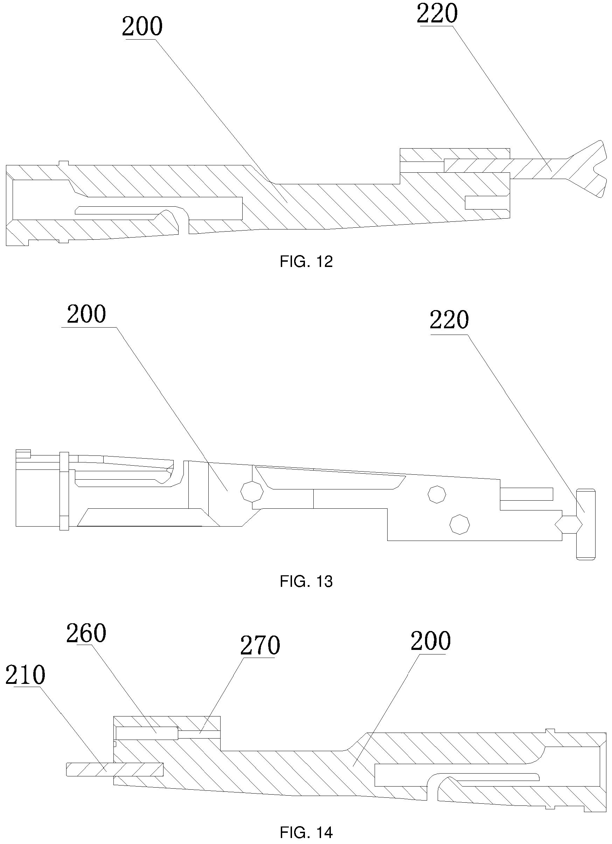

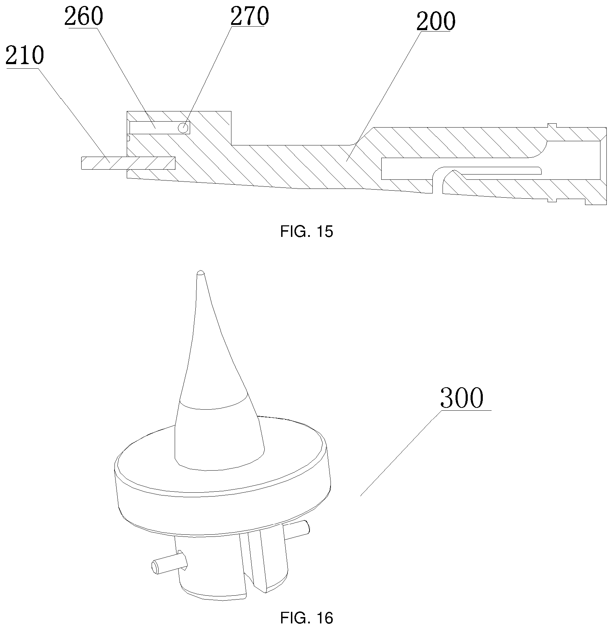

In the above scheme, to facilitate the insertion of the drive shaft 220, as shown in Figures 14 and 15, the swing arm 200 is provided with an exhaust hole 270 connected to the rear end of the anti-rotation slot 260. The extension axis of the exhaust hole 270 is parallel or perpendicular to the extension axis of the anti-rotation slot 260.

In this embodiment, as shown in Figures 6, 7, and 9, the balance spring 600 has balancing members 630 hooked to the spring sections 610 on both sides. The sidewalls of the mounting chamber are correspondingly provided with guide fixing grooves for the insertion of the balancing members 630. The cooperation between the balancing members 630 and the guide fixing grooves plays a role in positioning and guiding to facilitate the overall installation of the swing arm 200; the guide fixing grooves are provided at the front end of their slot walls with balance member ribs 1211 for the balancing members 630. These balance member ribs 1211, in conjunction with the front end of the guide fixing grooves, form a limiting housing area for the positioning of the balancing members 630. The front wall surface of the balance member rib 1211 is adapted to (tangent to) the outer surface of the balancing member 630, and its rear wall surface is a sloped or arcuate structure for guiding the balancing member 630 to slide in. Once installed, the balancing member 630 is constrained within the limiting housing area, restricting the movement of the balancing member 630 and effectively reducing noise.

In some other specific embodiments, two or more guide protrusions 321 can also be set on the tufted block 300, that is, at least one guide protrusion 321 is set on the sidewalls of the tufted block 300 on both sides of the second central axis B.

In some other specific embodiments, guide grooves 112 can also be set on the tufted block 300, and corresponding guide protrusions 321 are set on the inner wall of the housing cavity 110, to achieve the cooperation of the two for movement in all directions.

In some other specific embodiments, as shown in Figure 16, the bristles on the tufted block can also be selected and replaced with soft rubber spikes for massaging the gums.

Compared with the prior art, the structure of the present invention is simple and reasonable, with the following advantages:
1. By the cooperation of the guide protrusions and the guide grooves, the tufted block can swing left and right in the horizontal direction while also being able to move up and down in the vertical direction. During the brushing process, the left and right swinging of the tufted block can achieve up and down brushing, and the up and down movement of the tufted block can apply a vertical gentle impact force on the tooth surface, allowing the bristles to better penetrate into the gaps between teeth and move in and out along the gaps to push out the residues in the gaps, thus improving the cleaning effect of the toothbrush head;
2. The tufted block can be easily inserted into the housing cavity of the brush rod through the mounting slot and the guide protrusions can be snapped into the corresponding guide grooves;
3. By limiting the position of the mounting slot on the housing cavity and coordinating the drive shaft with the swinging slot to limit the swinging angle, it ensures that the guide protrusions move within the guide grooves, guaranteeing the reliability and stability of the movement of the tufted block;
4. The elastic reset components symmetrically arranged on both sides of the swing arm not only have a buffering effect to reduce noise but also enable the swing arm to have an automatic centering function, ensuring that the extension axis of the tufted block and the brush rod are always on the same line or parallel lines, ensuring the overall aesthetic and consistency of the electric toothbrush head.

The above disclosure is only an embodiment of the present invention, but the invention is not limited to this. The scope of protection of the present invention is defined by the appended claims.

## Claims

1. An electric toothbrush head for use with an electric toothbrush handle, comprising a brush rod (100), a swing arm (200), and a tufted block (300) with bristles (311); wherein the brush rod (100) has a first central axis (A), the brush rod (100) is provided with a housing cavity (110) on an upper surface of a front end portion of the brush rod (100),
and the brush rod (100) is provided with a mounting chamber (120) extending from a rear end portion of the brush rod (100) to the front end portion of the brush rod (100) and communicating with the housing cavity (110) along the first central axis (A);
the tufted block (300) is movably and limitingly mounted in the housing cavity (110) of the brush rod (100), the tufted block (300) has a second central axis (B) and is centered by aligning the second central axis (B) parallel or collinear with the first central axis (A) , wherein the second central axis (B) extends perpendicularly to an axis of a rotating shaft (130) on which the tufted block (300) rotates; the swing arm (200) is mounted in the mounting chamber (120) of the brush rod (100) and is connected to the tufted block (300) in a linked manner;
wherein the brush rod (100) is provided with the vertically extending rotating shaft (130) at the middle of the bottom of the housing cavity (110), and the bottom of the tufted block (300) is correspondingly provided with a rotating hole (322) that cooperates with the rotating shaft (130) to allow rotation around the axis of the rotating shaft (130);
the tufted block (300) has at least one guide protrusion (321) on each of its side walls located on opposite sides of the second central axis (B) , the opening of the housing cavity (110) is provided with a plurality of mounting slots (111) corresponding to the guide protrusions (321) for receiving said guide protrusions (321) when the second central axis (B) of the tufted block (300) is deflected at a first angle (C) relative to the first central axis (A), and the inner wall of the housing cavity (110) is also provided with a plurality of guide grooves (112) corresponding to the plurality of mounting slots (111) and communicating therewith for the guide protrusions (321) to slide into the guide grooves (112) to guide the tufted block (300) to move up, down, left, and right, the guide grooves (112) on both sides of the first central axis (A) on the housing cavity (110) are arranged to extend in opposite directions;
the rear end portion of the tufted block (300) is provided with a swinging slot (323), the front end portion of the swing arm (200) is provided with a drive shaft (220) extending into the swinging slot (323), and the drive shaft (220) drives the tufted block (300) to swing left and right around the vertically extending rotating shaft (130) by contacting the opposite inner walls of the swinging slot (323), and the maximum deflection angle of the swing arm (200) driving the tufted block (300) to swing on one side is less than the first angle (C).

2. The electric toothbrush head according to claim 1, **characterized in that** the amplitude of the tufted block (300) moving up and down along the guide groove (112) is 0.1mm-2mm.

3. The electric toothbrush head according to claim 1, **characterized in that** the bottom wall of the mounting chamber (120) is provided with a limiting rib (140), the top of the limiting rib (140) is spaced from the top wall of the mounting chamber (120) to form a through channel (142), the front end portion of the swing arm (200) abuts against the limiting rib (140) and is provided with a positioning pivot (210) at the corresponding abutting position, and the limiting rib (140) is correspondingly provided with a positioning hole (141) that cooperates with the positioning pivot (210) to allow the swing arm (200) to swing left and right around the axis of the positioning pivot (210); the drive shaft (220) of the swing arm (200) is arranged to extend through the through channel (142) and is connected to the tufted block (300) through the through channel (142).

4. The electric toothbrush head according to claim 3, **characterized in that** the swing arm (200) is symmetrically provided with elastic reset components (600, 610) on both sides of its front end portion, and the elastic reset components on both sides always have a tendency to automatically rotate the swing arm (200) towards the center to achieve movement towards the center.

5. The electric toothbrush head according to claim 4, **characterized in that** the elastic reset components on both sides of the swing arm (200) are part of an integral balance spring (600), the balance spring (600) includes spring sections (610) on both sides and a connecting part (620) connecting the two spring sections (610).

6. The electric toothbrush head according to claim 5, **characterized in that** the swing arm (200) is provided on both sides of its front end portion with notches (230) for embedding the spring sections (610) and recesses (240) extending from the front end of the swing arm (200) to the rear to guide into both sides of the notches (230) each spring sections (610) and for embedding the connecting part (620).

7. The electric toothbrush head according to claim 5 or 6, **characterized in that** the front end face of the swing arm (200) is provided with an anti-rotation slot (260), and the tail of the drive shaft (220) has a step (222);
when the drive shaft (220) is fixedly inserted into the anti-rotation slot (260) of the swing arm (200), the step (222) is constructed to press against the connecting part (620) of the balance spring (600).

8. The electric toothbrush head according to claim 7, **characterized in that** the swing arm (200) is correspondingly provided with an exhaust hole (270) connected to the rear end of the anti-rotation slot (260), and the extension axis of the exhaust hole (270) is parallel or perpendicular to the extension axis of the anti-rotation slot (260).

9. The electric toothbrush head according to claim 6, **characterized in that** both sides of the notch (230) are provided with positioning posts (250) that cooperate with inner holes of the spring sections (610).

10. The electric toothbrush head according to claim 4, **characterized in that** the elastic reset components on both sides are fixedly connected with balancing members (630), and the opposite side walls of the mounting chamber (120) are correspondingly provided with guide fixing grooves (121) for embedding the balancing members (630).

11. The electric toothbrush head according to claim 10, **characterized in that** the guide fixing groove (121) is provided with a balance member rib (1211) corresponding to a front slot wall, the balance member rib (1211) and the front end of the guide fixing groove (121) cooperate to form a limiting placement area for limiting the placement of the balance member (630), the front wall surface of the balance member rib (1211) is tangent to the outer surface of the balance member (630), and its rear wall surface is a sloped or curved structure for guiding the balance member (630) to slide in.

12. The electric toothbrush head according to claim 1, **characterized in that** the front end portion of the drive shaft (220) is provided with a bent segment (221) arranged in the swinging slot (323), and the tufted block (300) is driven to swing left and right by the bent segment (221) contacting the corresponding opposite inner walls of the swinging slot (323).

13. The electric toothbrush head according to claim 1, further comprising a fixation sleeve,(400), the fixation sleeve (400) is fixedly mounted inside the rear end portion of the mounting chamber (120) to lock the swing arm (200) in place within the mounting chamber (120).

14. The electric toothbrush head according to claim 1, **characterized in that** the cross-sectional shape of the guide protrusion (321) is circular, elliptical, triangular, or trapezoidal.

15. The electric toothbrush head according to claim 1, **characterized in that** the guide groove (112) is helical, sloped, or arc-shaped.

16. The electric toothbrush head according to claim 1, **characterized in that** the guide protrusion (321) is integrally connected to the tufted block (300), or the guide protrusion (321) is a separate component mounted on the tufted block (300).

## Patentansprüche

1. Elektrischer Zahnbürstenkopf zur Verwendung mit einem elektrischen Zahnbürstengriff, umfassend eine Bürstenstange (100), einen Schwenkarm (200) und einen getufteten Block (300) mit Borsten (311); wobei die Bürstenstange (100) eine erste Mittelachse (A) aufweist, die Bürstenstange (100) mit einem Gehäusehohlraum (110) an einer Oberfläche eines vorderen Endabschnitts der Bürstenstange (100) versehen ist und die Bürstenstange (100) mit einer Montagekammer (120) versehen ist, die sich von einem hinteren Endabschnitt der Bürstenstange (100) zum vorderen Endabschnitt der Bürstenstange (100) erstreckt und mit dem Gehäusehohlraum (110) entlang der ersten Mittelachse (A) in Verbindung steht;
der getuftete Block (300) beweglich und begrenzt in dem Gehäusehohlraum (110) der Bürstenstange (100) gelagert ist, der getuftete Block (300) eine zweite Zentralachse (B) aufweist und durch Ausrichten der zweiten Zentralachse (B) parallel oder kollinear zur ersten Zentralachse (A) zentriert ist, wobei sich die zweite Zentralachse (B) senkrecht zu einer Achse einer Drehwelle (130) erstreckt, auf der sich der getuftete Block (300) dreht; der Schwenkarm (200) in der Montagekammer (120) der Bürstenstange (100) gelagert ist und mit dem getufteten Block (300) in gekoppelter Weise verbunden ist;
wobei die Bürstenstange (100) mit der sich vertikal erstreckenden Drehwelle (130) in der Mitte des Bodens des Gehäusehohlraums (110) versehen ist, und der Boden des getufteten Blocks (300) entsprechend mit einem Drehloch (322) versehen ist, das mit der Drehwelle (130) zusammenwirkt, um eine Drehung um die Achse der Drehwelle (130) zu ermöglichen;
der getuftete Block (300) an jeder seiner Seitenwände, die sich auf gegenüberliegenden Seiten der zweiten Zentralachse (B) befinden, mindestens einen Führungsvorsprung (321) aufweist, die Öffnung des Gehäusehohlraums (110) mit einer Vielzahl von Führungsvorsprüngen (321) entsprechenden Montageschlitzen (111) zur Aufnahme der Führungsvorsprünge (321) versehen ist, wenn die zweite Zentralachse (B) des getufteten Blocks (300) in einem ersten Winkel (C) relativ zur ersten Zentralachse (A) abgelenkt ist, und die Innenwand des Gehäusehohlraums (110) außerdem mit einer Vielzahl von Führungsnuten (112) versehen ist, die der Vielzahl von Montagenuten (111) entsprechen und damit kommunizieren, damit die Führungsvorsprünge (321) in die Führungsnuten (112) gleiten, um den getufteten Block (300) nach oben, unten, links und rechts zu führen, wobei die Führungsnuten (112) auf beiden Seiten der ersten Mittelachse (A) am Gehäusehohlraum (110) so angeordnet sind, dass sie sich in entgegengesetzte Richtungen erstrecken;
der hintere Endabschnitt des getufteten Blocks (300) mit einem Schwenkschlitz (323) versehen ist, der vordere Endabschnitt des Schwenkarms (200) mit einer Antriebswelle (220) versehen ist, die sich in den Schwenkschlitz (323) erstreckt, und die Antriebswelle (220) den getufteten Block (300) dazu antreibt, durch Kontakt mit den gegenüberliegenden Innenwänden des Schwenkschlitzes (323) um die vertikal verlaufende Drehwelle (130) nach links und rechts zu schwenken, und der maximale Auslenkungswinkel des Schwenkarms (200), der den getufteten Block (300) dazu antreibt, auf eine Seite zu schwenken, kleiner ist als der erste Winkel (C).

2. Elektrischer Zahnbürstenkopf nach Anspruch 1, **dadurch gekennzeichnet, dass** die Amplitude des getufteten Block (300), der sich entlang der Führungsnut (112) auf- und abbewegt, 0,1 mm-2 mm beträgt.

3. Elektrischer Zahnbürstenkopf nach Anspruch 1, **dadurch gekennzeichnet, dass** die Bodenwand der Montagekammer (120) mit einer Begrenzungsrippe (140) versehen ist, die Oberseite der Begrenzungsrippe (140) von der Oberwand der Montagekammer (120) zu einem Durchgangskanal (142) beabstandet ist, der vordere Endabschnitt des Schwenkarms (200) an der Begrenzungsrippe (140) anliegt und an der entsprechenden Anlageposition mit einem Positionierzapfen (210) versehen ist, und die Begrenzungsrippe (140) entsprechend mit einem Positionierloch (141) versehen ist, das mit dem Positionierzapfen (210) zusammenwirkt, um den Schwenkarm (200) links und rechts um die Achse des Positionierzapfens (210) schwenken zu lassen; die Antriebswelle (220) des Schwenkarms (200) so angeordnet ist, dass sie sich durch den Durchgangskanal (142) erstreckt und durch den Durchgangskanal (142) mit dem getufteten Block (300) verbunden ist.

4. Elektrischer Zahnbürstenkopf nach Anspruch 3, **dadurch gekennzeichnet, dass** der Schwenkarm (200) an beiden Seiten seines vorderen Endabschnitts symmetrisch mit elastischen Rückstellkomponenten (600, 610) versehen ist, und die elastischen Rückstellkomponenten an beiden Seiten immer dazu neigen, den Schwenkarm (200) automatisch zur Mitte hin zu drehen, um eine Bewegung zur Mitte hin zu erreichen.

5. Elektrischer Zahnbürstenkopf nach Anspruch 4, **dadurch gekennzeichnet, dass** die elastischen Rückstellkomponenten auf beiden Seiten des Schwenkarms (200) Teil einer integrierten Ausgleichsfeder (600) sind, die Ausgleichsfeder (600) beidseitig Federabschnitte (610) und ein Verbindungsteil (620) enthält, das die beiden Federabschnitte (610) verbindet.

6. Elektrischer Zahnbürstenkopf nach Anspruch 5, **dadurch gekennzeichnet, dass** der Schwenkarm (200) auf beiden Seiten seines vorderen Endabschnitts mit Kerben (230) zum Einbetten der Federabschnitte (610) und Aussparungen (240) versehen ist, die sich von dem vorderen Ende des Schwenkarms (200) nach hinten erstrecken, um in beide Seiten der Kerben (230) jedes Federabschnitts (610) zu führen und das Verbindungsteil (620) einzubetten.

7. Elektrischer Zahnbürstenkopf nach Anspruch 5 oder 6, **dadurch gekennzeichnet, dass** das vordere Ende des Schwenkarms (200) mit einem Antirotationsschlitz (260) versehen ist und das Ende der Antriebswelle (220) eine Stufe (222) aufweist;
wenn die Antriebswelle (220) fest in den Antirotationsschlitz (260) des Schwenkarms (200) eingesetzt ist, ist die Stufe (222) so ausgelegt, dass sie gegen das Verbindungsteil (620) der Ausgleichsfeder (600) drückt.

8. Elektrischer Zahnbürstenkopf nach Anspruch 7, **dadurch gekennzeichnet, dass** der Schwenkarm (200) entsprechend mit einem mit dem hinteren Ende des Antirotationsschlitzes (260) verbundenen Auslassloch (270) versehen ist und die Verlängerungsachse des Auslasslochs (270) parallel oder senkrecht zur Verlängerungsachse des Antirotationsschlitzes (260) verläuft.

9. Elektrischer Zahnbürstenkopf nach Anspruch 6, **dadurch gekennzeichnet, dass** beide Seiten der Kerbe (230) mit Positionierstiften (250) versehen sind, die mit Innenbohrungen der Federabschnitte (610) zusammenwirken.

10. Elektro-Zahnbürstenkopf nach Anspruch 4, **dadurch gekennzeichnet, dass** die elastischen Rückstellkomponenten beidseitig fest mit Ausgleichselementen (630) verbunden sind und die gegenüberliegenden Seitenwände der Aufnahmekammer (120) entsprechend mit Führungsbefestigungsnuten (121) zum Einbetten der Ausgleichselemente (630) versehen sind.

11. Elektrischer Zahnbürstenkopf nach Anspruch 10, **dadurch gekennzeichnet, dass** die Führungsbefestigungsnut (121) mit einer einer vorderen Schlitzwand entsprechenden Ausgleichselementrippe (1211) versehen ist, die Ausgleichselementrippe (1211) und das vordere Ende der Führungsbefestigungsnut (121) zusammenwirken, um einen begrenzenden Ablagebereich zur Begrenzung der Platzierung des Ausgleichselements (630) zu bilden, die Vorderwandfläche der Ausgleichselementrippe (1211) tangential zur Außenfläche des Ausgleichselements (630) ist, und deren Rückwandfläche eine schräge oder gekrümmte Struktur zur Führung des Ausgleichselements (630) zum Einschieben ist.

12. Elektrischer Zahnbürstenkopf nach Anspruch 1, **dadurch gekennzeichnet, dass** der vordere Endabschnitt der Antriebswelle (220) mit einem in dem Schwenkschlitz (323) angeordneten gebogenen Segment (221) versehen ist, und der getuftete Block (300) durch den Kontakt des gebogenen Segments (221) mit den entsprechenden gegenüberliegenden Innenwänden des Schwenkschlitzes (323) nach links und rechts geschwenkt wird.

13. Elektrischer Zahnbürstenkopf nach Anspruch 1, der ferner eine Befestigungshülse (400) umfasst, die Befestigungshülse (400) fest innerhalb des hinteren Endabschnitts der Montagekammer (120) montiert ist, um den Schwenkarm (200) innerhalb der Montagekammer (120) in Position zu arretieren.

14. Elektrischer Zahnbürstenkopf nach Anspruch 1, **dadurch gekennzeichnet, dass** die Querschnittsform des Führungsvorsprungs (321) kreisförmig, elliptisch, dreieckig oder trapezförmig ist.

15. Elektrischer Zahnbürstenkopf nach Anspruch 1, **dadurch gekennzeichnet, dass** die Führungsnut (112) spiralförmig, schräg oder bogenförmig ist.

16. Elektrischer Zahnbürstenkopf nach Anspruch 1, **dadurch gekennzeichnet, dass** der Führungsvorsprung (321) integral mit dem getufteten Block (300) verbunden ist, oder der Führungsvorsprung (321) ein separates Bauteil ist, das auf dem getufteten Block (300) montiert ist.

## Revendications

1. Tête de brosse à dents électrique pour une utilisation avec un manche de brosse à dents électrique, comportant une tige de brosse (100), un bras oscillant (200) et un bloc à touffe (300) avec des poils (311) ; dans laquelle la tige de brosse (100) présente un premier axe central (A), la tige de brosse (100) est pourvue d'une cavité de logement (110) sur une surface supérieure d'une partie d'extrémité avant de la tige de brosse (100), et la tige de brosse (100) est pourvue d'une chambre de montage (120) s'étendant d'une partie d'extrémité arrière de la tige de brosse (100) à la partie d'extrémité avant de la tige de brosse (100) et communiquant avec la cavité de logement (110) le long du premier axe central (A) ;
le bloc à touffe (300) est monté de manière mobile et limitative dans la cavité de logement (110) de la tige de brosse (100), le bloc à touffe (300) présente un deuxième axe central (B) et est centré en alignant le deuxième axe central (B) parallèlement ou colinéairement au premier axe central (A), dans laquelle le deuxième axe central (B) s'étend perpendiculairement à un axe d'un arbre rotatif (130) sur lequel le bloc à touffe (300) tourne ; le bras oscillant (200) est monté dans la chambre de montage (120) de la tige de brosse (100) et est raccordé au bloc à touffe (300) de manière liée ;
dans laquelle la tige de brosse (100) est pourvue de l'arbre rotatif (130) s'étendant verticalement au milieu du fond de la cavité de logement (110), et le fond du bloc à touffe (300) est pourvu en conséquence d'un trou rotatif (322) qui coopère avec l'arbre rotatif (130) pour permettre une rotation autour de l'axe de l'arbre rotatif (130) ;
le bloc à touffe (300) présente au moins une saillie de guidage (321) sur chacune de ses parois latérales situées sur les côtés opposés du deuxième axe central (B), l'ouverture de la cavité de logement (110) est pourvue d'une pluralité de fentes de montage (111) correspondant aux saillies de guidage (321) pour recevoir lesdites saillies de guidage (321) lorsque le deuxième axe central (B) du bloc à touffe (300) est dévié à un premier angle (C) par rapport au premier axe central (A), et la paroi intérieure de la cavité de logement (110) est également pourvue d'une pluralité de rainures de guidage (112) correspondant à la pluralité de fentes de montage (111) et communiquant avec celles-ci pour que les saillies de guidage (321) glissent dans les rainures de guidage (112) pour guider le bloc à touffe (300) afin qu'il se déplace vers le haut, le bas, la gauche et la droite, les rainures de guidage (112) des deux côtés du premier axe central (A) sur la cavité de logement (110) sont agencées pour s'étendre dans des directions opposées ;
la partie d'extrémité arrière du bloc à touffe (300) est pourvue d'une fente oscillante (323), la partie d'extrémité avant du bras oscillant (200) est pourvue d'un arbre d'entraînement (220) s'étendant dans la fente oscillante (323), et l'arbre d'entraînement (220) entraîne le bloc à touffe (300) pour qu'il oscille vers la gauche et vers la droite autour de l'arbre rotatif (130) s'étendant verticalement en entrant en contact avec les parois intérieures opposées de la fente oscillante (323), et l'angle de déflexion maximal du bras oscillant (200) entraînant le bloc à touffe (300) pour qu'il oscille d'un côté est inférieur au premier angle (C).

2. Tête de brosse à dents électrique selon la revendication 1, **caractérisée en ce que** l'amplitude du bloc à touffe (300) se déplaçant vers le haut et vers le bas le long de la rainure de guidage (112) est de 0,1 mm-2 mm.

3. Tête de brosse à dents électrique selon la revendication 1, **caractérisée en ce que** la paroi inférieure de la chambre de montage (120) est pourvue d'une nervure de limitation (140), le haut de la nervure de limitation (140) est espacé de la paroi supérieure de la chambre de montage (120) pour former un canal traversant (142), la partie d'extrémité avant du bras oscillant (200) est en butée contre la nervure de limitation (140) et est pourvue d'un pivot de positionnement (210) à la position de butée correspondante, et la nervure de limitation (140) est pourvue en conséquence d'un trou de positionnement (141) qui coopère avec le pivot de positionnement (210) pour permettre au bras oscillant (200) d'osciller vers la gauche et vers la droite autour de l'axe du pivot de positionnement (210) ; l'arbre d'entraînement (220) du bras oscillant (200) est agencé pour s'étendre à travers le canal traversant (142) et est raccordé au bloc à touffe (300) par le biais du canal traversant (142).

4. Tête de brosse à dents électrique selon la revendication 3, **caractérisée en ce que** le bras oscillant (200) est pourvu symétriquement de composants de rappel élastiques (600, 610) des deux côtés de sa partie d'extrémité avant, et les composants de rappel élastiques des deux côtés ont toujours tendance à faire tourner automatiquement le bras oscillant (200) vers le centre pour obtenir un mouvement vers le centre.

5. Tête de brosse à dents électrique selon la revendication 4, **caractérisée en ce que** les composants de rappel élastique des deux côtés du bras oscillant (200) font partie d'un ressort d'équilibre (600) d'une seule pièce, le ressort d'équilibre (600) comporte des sections de ressort (610) des deux côtés et une partie de raccordement (620) raccordant les deux sections de ressort (610).

6. Tête de brosse à dents électrique selon la revendication 5, **caractérisée en ce que** le bras oscillant (200) est pourvu des deux côtés de sa partie d'extrémité avant d'encoches (230) pour l'insertion des sections de ressort (610) et d'évidements (240) s'étendant de l'extrémité avant du bras oscillant (200) vers l'arrière pour guider dans les deux côtés des encoches (230) chaque section de ressort (610) et pour l'insertion de la partie de raccordement (620).

7. Tête de brosse à dents électrique selon la revendication 5 ou 6, **caractérisée en ce que** la face d'extrémité avant du bras oscillant (200) est pourvue d'une fente anti-rotation (260), et l'arrière de l'arbre d'entraînement (220) présente une marche (222) ;
lorsque l'arbre d'entraînement (220) est inséré de manière fixe dans la fente anti-rotation (260) du bras oscillant (200), la marche (222) est construite pour appuyer contre la partie de raccordement (620) du ressort d'équilibre (600).

8. Tête de brosse à dents électrique selon la revendication 7, **caractérisée en ce que** le bras oscillant (200) est pourvu en conséquence d'un trou d'échappement (270) raccordé à l'extrémité arrière de la fente anti-rotation (260), et l'axe d'extension du trou d'échappement (270) est parallèle ou perpendiculaire à l'axe d'extension de la fente anti-rotation (260).

9. Tête de brosse à dents électrique selon la revendication 6, **caractérisée en ce que** les deux côtés de l'encoche (230) sont pourvus de montants de positionnement (250) qui coopèrent avec les trous intérieurs des sections de ressort (610).

10. Tête de brosse à dents électrique selon la revendication 4, **caractérisée en ce que** les composants de rappel élastique des deux côtés sont raccordés de manière fixe à des éléments d'équilibrage (630), et les parois latérales opposées de la chambre de montage (120) sont pourvues en conséquence de rainures de fixation de guidage (121) pour l'insertion des éléments d'équilibrage (630).

11. Tête de brosse à dents électrique selon la revendication 10, **caractérisée en ce que** la rainure de fixation de guidage (121) est pourvue d'une nervure d'élément d'équilibre (1211) correspondant à une paroi de fente avant, la nervure d'élément d'équilibre (1211) et l'extrémité avant de la rainure de fixation de guidage (121) coopèrent pour former une zone de placement de limitation pour limiter le placement de l'élément d'équilibre (630), la surface de paroi avant de la nervure d'élément d'équilibre (1211) est tangente à la surface extérieure de l'élément d'équilibre (630), et sa surface de paroi arrière est une structure inclinée ou courbée pour guider l'élément d'équilibre (630) pour qu'il y glisse.

12. Tête de brosse à dents électrique selon la revendication 1, **caractérisée en ce que** la partie d'extrémité avant de l'arbre d'entraînement (220) est pourvue d'un segment plié (221) agencé dans la fente oscillante (323), et le bloc à touffe (300) est entraîné pour osciller vers la gauche et vers la droite par le segment fléchi (221) en contact avec les parois intérieures opposées correspondantes de la fente oscillante (323).

13. Tête de brosse à dents électrique selon la revendication 1, comportant en outre un manchon de fixation (400), le manchon de fixation (400) est monté de manière fixe à l'intérieur de la partie d'extrémité arrière de la chambre de montage (120) pour verrouiller le bras oscillant (200) en place à l'intérieur de la chambre de montage (120).

14. Tête de brosse à dents électrique selon la revendication 1, **caractérisée en ce que** la forme de section transversale de la saillie de guidage (321) est circulaire, elliptique, triangulaire ou trapézoïdale.

15. Tête de brosse à dents électrique selon la revendication 1, **caractérisée en ce que** la rainure de guidage (112) est hélicoïdale, inclinée ou en forme d'arc.

16. Tête de brosse à dents électrique selon la revendication 1, **caractérisée en ce que** la saillie de guidage (321) est raccordée d'une seule pièce au bloc à touffe (300), ou la saillie de guidage (321) est un composant séparé monté sur le bloc à touffe (300).
